# EUROPÄISCHE PATENTSCHRIFT

(11) **EP 3 740 669 B1**
(45) Veröffentlichungstag und Bekanntmachung des Hinweises auf die Patenterteilung: **07.06.2023**
(21) Anmeldenummer: 19700917.8
(22) Anmeldetag: 16.01.2019
(51) Int. Cl.: F03D 1/06

(54) **WINDENERGIEANLAGE UND ROTORBLATT FÜR EINE WINDENERGIEANLAGE**
WIND TURBINE AND ROTOR BLADE FOR A WIND TURBINE
ÉOLIENNE ET PALE DE ROTOR POUR UNE ÉOLIENNE

(30) Priorität: 17.01.2018 DE 102018100963
(43) Veröffentlichungstag der Anmeldung: 25.11.2020
(73) Patentinhaber: Wobben Properties GmbH, 26607 Aurich (DE)
(72) Erfinder: SPIETH, Falk, 26603 Aurich (DE)
(74) Vertreter: Eisenführ Speiser
(86) Internationale Anmeldenummer: PCT/EP2019/051031
(87) Internationale Veröffentlichungsnummer: WO 2019/141720

(56) Entgegenhaltungen:
- WO-A1-2018/224225
- WO-A2-2011/088835
- DE-A1-102014 214 220
- DE-A1-102015 116 634
- US-A1- 2010 127 504
- US-A1- 2010 247 314
- US-A1- 2012 169 060
- US-A1- 2014 227 100
- US-A1- 2014 328 691

## Beschreibung

Die Erfindung betrifft ein Rotorblatt für eine Windenergieanlage, mit einer Rotorblattwurzel zur Befestigung des Rotorblatts an einer Nabe einer Windenergieanlage, einem Innenblattabschnitt, welcher sich ausgehend von der Rotorblattwurzel in Richtung einer Längserstreckung des Rotorblatts erstreckt, und einem Hinterkantensegment zur Vergrößerung der Tiefe des Rotorblatts in Profiltiefenrichtung im Bereich des Innenblattabschnitts, wobei das Hinterkantensegment an dem Innenblattabschnitt befestigt ist und eine dem Innenblattabschnitt zugewandte Kante aufweist.

In der prioritätsbegründenden deutschen Anmeldung hat das Deutsche Patent- und Markenamt die folgenden Dokumente recherchiert: DE 10 2005 040 479 A1, DE 10 2012 109 170 A1, DE 10 2012 11 195A1, DE 10 2014 214 220 A1, DE 10 2015 116 634 A1. Weiterer Stand der Technik ist in US 2010/127504 A1 offenbart.

Derartige Rotorblätter, welche bezogen auf die Rotorrotationsrichtung mehrere Abschnitte bzw. Segmente aufweisen, sind bekannt. Es hat sich als vorteilhaft erwiesen, solche Rotorblätter insbesondere für sehr große Rotordurchmesser nicht ausschließlich einstückig auszubilden, sondern dergestalt, dass ein Innenblattabschnitt sowie ein Hinterkantensegment zumindest teilweise separat voneinander gefertigt werden und sodann verbunden werden. Die Verbindung der Bauteile kann bedarfsweise in einem Herstellungswerk selbst, unmittelbar vor der Montage eines Rotorblatts an einer Windenergieanlage oder an einem dazu eingerichteten Montagestandort erfolgen. Nach der Verbindung eines solchen Innenblattabschnittes mit einem betreffenden Hinterkantensegment entsteht im Übergangsbereich zwischen den beiden Segmenten typischerweise eine Oberflächen-Spalt. Da im Betrieb eine Vielzahl von Kräften und Momenten, wie beispielsweise Zentrifugalkräften, auf das Rotorblatt wirken und selbiges zugleich unterschiedlichen Temperaturen ausgesetzt sein kann, ist die Größe des sich zwischen dem Innenblattabschnitt und dem Hinterkantensegment ausbildenden Spaltes Veränderungen unterworfen.

Prinzipiell sind bei Rotorblättern eine hohe aerodynamische Güte und insbesondere eine im Bereich des Übergangs vom Innenblattabschnitt zum Hinterkantensegment möglichst ebene und weitestgehend stetig verlaufende Blattoberfläche anzustreben, damit widerstandsinduzierende Luftwirbel möglichst weitgehend eingeschränkt bzw. vermieden werden können. Ziel ist es, den Strömungswiderstand eines solchen Rotorblatts zu reduzieren und den Energieertrag der Windenergieanlage zu optimieren.

In der Vergangenheit wurde zur Reduzierung des Übergangsspaltes zwischen dem Innenblattabschnitt und dem Hinterkantensegment am Übergang zwischen selbigen ein keilförmiges Element angeordnet. Dieses auch als Konturkeil bezeichnete Element dient im Wesentlichen der Ermöglichung eines strömungsgünstigen, weitestgehend stetigen Übergangs von dem Innenblattabschnitt zum Hinterkantensegment. Ein solcher Konturkeil wird typischerweise fest mit dem Innenblattabschnitt verbunden. Allerdings war es auch bei Verwendung eines solchen Konturkeils erforderlich, einen gewissen Spalt zwischen dem an dem Innenblattabschnitt angeordneten Konturkeil und dem Hinterkantensegment bereitzustellen, um im Falle von auf die Bauteile wirkenden Biegebeanspruchungen, Torsionsmomenten und Temperaturänderungen mit damit verbundenen Materialausdehnungen, zu vermeiden, dass die betroffenen Bauteile miteinander in Kontakt treten und mit Spannungen beaufschlagt werden, die die Bauteile schädigen können.

Auch wenn sich durch die Verwendung eines solchen Konturkeils bereits aerodynamische Vorteile im Vergleich zu einer Lösung ohne einen solchen Keil erzielen ließen, so verblieb durch den Spalt zwischen Innenblattabschnitt und Hinterkantensegment ein aerodynamischer Störfaktor.

Es war daher die Aufgabe der vorliegenden Erfindung, ein Rotorblatt der eingangs bezeichneten Art dahingehend weiterzubilden, dass die im Stand der Technik aufgefundenen Nachteile möglichst weitgehend behoben werden. Insbesondere war ein Rotorblatt anzugeben, welches eine höhere aerodynamische Effizienz aufweist, ohne anfälliger für Schädigungen durch Verschleiß zu werden.

Erfindungsgemäß wird die Aufgabe bei einem Rotorblatt der eingangs genannten Art dadurch gelöst, dass in einem Übergangsbereich von dem Innenblattabschnitt zu der Kante des Hinterkantensegments eine Abdecklippe angeordnet ist, die mit der Kante überlappt.

Die Erfindung macht sich die Erkenntnis zunutze, dass eine solche Abdecklippe, die die Kante des Hinterkantensegments überlappt, dazu geeignet ist, die Oberflächengüte und Oberflächenstetigkeit eines solchen Übergangs von dem Innenblattabschnitt zu dem Hinterkantensegment zu verbessern, sodass eine aerodynamische Strömung eine solche Oberfläche widerstandsärmer passieren kann.

Gleichzeitig gewährleistet das Überlappen der Kante des Hinterkantensegments eine größere Relativbeweglichkeit zwischen dem Innenblattabschnitt und der Kante des Hinterkantensegments, sodass im Betrieb auftretende Kräfte und Momente und insbesondere aus unterschiedlichen Temperaturen resultierende Bauteilverformungen kompensiert werden können, weil das Hinterkantensegment und die Abdecklippe nicht "auf Stoß liegen". Die Abdecklippe ist dabei so dimensioniert, dass auch bei einer Relativbewegung des Innenblattabschnittes relativ zu der Kante des Hinterkantensegments die Entstehung eines Spaltes zwischen den beiden Bauteilen vermieden wird. Insgesamt wird damit die aerodynamische Effizienz und damit der Wirkungsgrad eines solchen Rotors im Vergleich zu den aus dem Stand der Technik bekannten Lösungen verbessert.

Die Erfindung wird dadurch weitergebildet, dass die Abdecklippe einen Übergangsbereich von dem Innenblattabschnitt zu der Kante des Hinterkantensegments überlappt. Dabei hat sich eine solche Überlappung des Übergangs von dem Innenblattabschnitt zu der Kante des Hinterkantensegments als besonders geeignet erwiesen, die Strömung möglichst widerstandsarm über den Übergang der beiden Segmente zu führen. Die Abdecklippe ist dabei vorzugsweise an die räumliche Kontur der Kante angepasst. Dazu kann die Abdecklippe als ebenes Element ausgebildet sein oder aber als gebogene Fläche, je nach vorherrschenden aerodynamischen Bedingungen.

Gemäß einer bevorzugten Ausführungsform erstreckt sich die Abdecklippe zumindest abschnittsweise oder vollständig in Richtung der Rotorblattlängserstreckung. Bei Rotorblättern für leistungsstarke Windenergieanlagen hat es sich als vorteilhaft erwiesen, das Hinterkantensegment zusätzlich entlang der Rotorblattlängserstreckung in einzelne Segmente zu unterteilen. In einem solchen Fall ist es vorteilhaft, auch die Abdecklippe in einzelne Abschnitte zu unterteilen und entsprechend jedem Abschnitt des Hinterkantensegments eine einzelne Abdecklippe zuzuweisen, welche sich in Richtung der Rotorblattlängserstreckung erstreckt. Gleichzeitig kann es für Rotorblätter mit einteiligen Hinterkantensegmenten vorteilhaft sein, eine einzelne Abdecklippe zu verwenden, die sich vollständig oder im Wesentlichen vollständig in Richtung der Rotorblattlängserstreckung bzw. entlang des Hinterkastens der Rotorblätter erstreckt.

Die Abdecklippe weist erfindungsgemäß eine Tasche mit einer Tiefe auf, in welcher die Kante des Hinterkantensegments entlang der Tiefe der Tasche beweglich aufgenommen ist. Die Tasche umgreift dabei inesbesondere die Kante des Hinterkantensegments, womit die Kante des Hinterkantensegments zwar entlang der Tiefe der Tasche beweglich ist, jedoch senkrecht zur Rotationsrichtung des Rotorblatts stets mit der Tasche in Kontakt steht. Damit ist sichergestellt, dass sich die Abdecklippe nicht von der Kante des Hinterkantensegments abhebt und hierdurch einen Spalt erzeugt. Gleichzeitig bleibt jedoch eine Bewegung der Kante des Hinterkantensegments entlang der Tiefe der Tasche möglich, wodurch vermieden wird, dass Spannungen in die betroffenen Bauteile eingebracht werden.

Die Abdecklippe weist vorzugsweise einen Grundkörper aus einem faserverstärkten Kunststoff, insbesondere aus glasfaserverstärktem Kunststoff (GFK), auf. Gemäß einer weiteren alternativen Ausführungsform können jedoch auch kohlefaserverstärkter Kunststoff (CFK) oder andere Faserverbundmaterialien sowie Kombinationen mehrerer verschiedener Fasertypen, etwa Glasfasern und Kohlefasern, verwendet werden. Da Innenblattabschnitt und Hinterkantensegment typischerweise signifikante GFK-Anteile aufweisen, hat sich die Verwendung von GFK auch für den Grundkörper einer solche Abdecklippe als vorteilhaft erwiesen.

Gemäß der Erfindung weist die Tasche einen oder mehrere Gleitkörper mit einer Gleitfläche zur gleitenden Aufnahme der Kante des Hinterkantensegments auf. Um eine möglichst widerstandsarme Bewegbarkeit der Kante des Hinterkantensegments entlang der Tiefe der Tasche zu ermöglichen, hat es sich als vorteilhaft erwiesen, an den beiden Flächen der Tasche, die mit der Kante des Hinterkantensegments in Kontakt stehen, Gleitflächen auszubilden. Die Ausbildung solcher Gleitflächen bringt den Vorteil mit sich, dass ein Materialverschleiß sowohl im Bereich der Tasche als auch im Bereich der Kante des Hinterkantensegments reduziert wird. Gemäß einer Weiterbildung sind zusätzlich Gleitflächen an der Kante des Hinterkantensegments angeordnet.

Die Erfindung wird dadurch weitergebildet, dass die Gleitfläche aus einem thermoplastischen Kunststoff ausgebildet ist. Dadurch ist die Paarung zwischen Hinterkantensegment und Abdecklippe sehr haltbar, weil der thermoplastische Kunststoff verschleißarm auf dem faserverstärkten Kunststoff, insbesondere GFK, des Hinterkantenaspekts gleitet.

Auf einer der Gleitfläche abgewandten Seite des Gleitkörpers ist in einer bevorzugten Ausführungsform eine Gewebekaschierung angeordnet. Mit anderen Worten ist die Gewebekaschierung auf jener Seite des Gleitkörpers angeordnet, welche dem Tascheninneren abgewandt ist. Die Gewebekaschierung wird dabei bevorzugt beim Extrudieren des Gleitkörpers in selbige eingewalzt (kalandriert). Das Gewebe ist sodann durch Hinterschnitte (Mikroverzahnung) mit dem Gleitkörper fest verbunden. Vorzugsweise ist das zur Kaschierung eingesetzte Gewebe ein Polyestergewebe, insbesondere ein Polyesterstretchgewebe, welches ein Flächengewicht von 200 - 250 g/m² aufweist.

Der faserverstärkte Kunststoff der Abdecklippe weist vorzugsweise eine Matrix auf, die die Fasern einbettet, wobei die Gewebekaschierung des Gleitkörpers mit der Matrix des faserverstärkten Kunststoffes verbunden ist, insbesondere in ihr eingebettet ist. Die feste Verbindung zwischen dem Gleitkörper und dem faserverstärkten Kunststoff wird dabei besonders bevorzugt durch eine Verbindung des Matrixmaterials des faserverstärkten Kunststoffes mit der gewebekaschierten Seite des Gleitkörpers, insbesondere aufgrund von Hinterschnitten (Mikroverzahnungen), erzielt. Der Faserverbundwerkstoff der Abdecklippe ist damit selbst dann fest und dauerhaft haltbar mit dem Gleitkörper verbindbar, wenn als Matrixmaterial ein Material ausgewählt wird, das sich ansonsten nur schlecht oder gar nicht mit einem thermoplastischen Werkstoff verbinden lässt.

Vorzugsweise ist das Matrixmaterial ausgewählt aus der Liste bestehend aus: Epoxidharzen, Polyesterharzen, insbesondere ungesättigt, Vinylharzen, Phenol-Formaldehydharzen, Diallylphthalatharzen, Methacrylatharzen, Polyurethanharzen, Aminoharzen.

Ferner ist bevorzugt, dass der thermoplastische Kunststoff ausgewählt ist aus der Liste: Polyoxymethylen (POM), Polyethylenterephthalat (PET-P), Polyamid 6 (PA 6), Polyketon (PK), Polyvinylidenfluorid (PVDF) und Polypropylen (PP). Die Materialien weisen eine hohe Steifigkeit, niedrige Reibwerte, eine gute Dimensionsstabilität und thermische Stabilität auf.

Gemäß einer bevorzugten Weiterbildung weist die Abdecklippe einen Grundkörper mit einem ersten Ende und einem zweiten Ende auf, wobei an dem ersten Ende die Tasche angeordnet ist und an dem zweiten, der Tasche gegenüberliegenden Ende ein Befestigungsabschnitt zur Befestigung an dem Innenblattabschnitt. Dabei kann eine Befestigung des Befestigungsabschnittes der Abdecklippe an dem Innenblattabschnitt insbesondere mittels Verkleben erfolgen. Vorzugsweise weist der Befestigungsabschnitt eine Oberflächenvergrößerung, bevorzugt in Form einer im Vergleich zu anderen Flächenabschnitten des Grundkörpers angerauten Oberfläche auf, um ein haltbares Verkleben zu fördern.

Weiterhin bevorzugt ist an dem Befestigungsabschnitt eine Dichtung, insbesondere eine Gummidichtung, mit einem Dichtprofil angeordnet. Das Dichtprofil ist vorzugsweise ausgewählt aus den Formen: Notenprofil, Trapezprofil, gerundetes Profil, Hohlprofil, U-Profil, Winkelprofil oder Sonderprofil. Eine solche Dichtung dient insbesondere der lokalen Begrenzung der Klebefläche und verhindert ein ungewolltes seitliches Verlaufen, d.h. ein großflächiges Verteilen des Klebstoffes, insbesondere in Richtung der Kante des Hinterkantensegments. Darüber hinaus erhöht eine solche Dichtung die Stabilität der Klebeverbindung und dient darüber hinaus unterstützend zur Ausbildung eines keilförmigen Verlaufes der Abdecklippe relativ zu dem Innenblattabschnitt. Ein solcher keilförmiger Verlauf hat sich als aerodynamisch vorteilhaft erwiesen.

Gemäß einer bevorzugten Ausführungsform weist der Innenblattabschnitt einen kreisförmigen oder ovalen, insbesondere ellipsenförmigen Querschnitt auf. Der Innenblattabschnitt bildet in Blattwurzelnähe die Profilnase bzw. Vorderkante des Rotorblatts aus, wobei insbesondere die Form des Innenblattabschnittes somit die aerodynamischen Eigenschaften des Rotorblatts in Blattwurzelnähe im Wesentlichen mit beeinflusst.

Gemäß einer weiteren Ausführungsform ist bevorzugt, dass der Innenblattabschnitt als Wickelkörper ausgeführt ist. Ein solcher Wickelkörper lässt sich insbesondere teilautomatisiert fertigen.

Die Erfindung ist vorstehend unter Bezugnahme auf ein Rotorblatt beschrieben worden. In einem weiteren Aspekt betrifft die Erfindung eine Windenergieanlage mit einem Turm, einer drehbar an dem Turm gelagerten Gondel, einem drehbar an der Gondel gelagerten Rotor und einer Anzahl an dem Rotor befestigter Rotorblätter. Die Erfindung löst die eingangs bezeichnete Aufgabe in Bezug auf die Windenergieanlage, indem mindestens ein Rotorblatt nach einer der vorstehend beschriebenen bevorzugten Ausführungsformen ausgebildet ist.

Die Windenergieanlage macht sich die gleichen Vorteile und bevorzugten Ausführungsformen zunutze wie das erfindungsgemäße Rotorblatt. Diesbezüglich wird auf die obigen Ausführungen verwiesen und deren Inhalt hier mit einbezogen.

Die Erfindung wird nachfolgend anhand eines bevorzugten Ausführungsbeispiels unter Bezugnahme auf die beigefügten Figuren näher beschrieben.

Hierbei zeigen:
- Fig. 1: eine erfindungsgemäße Windenergieanlage in einer perspektivischen Darstellung;
- Fig. 2: ein Rotorblattsegment einer erfindungsgemäßen Windenergieanlage gemäß Fig. 1;
- Fig. 3: eine Schnittansicht des erfindungsgemäßen Rotorblattsegments gemäß Fig. 2;
- Fig. 4: eine Detailansicht der Schnittansicht des erfindungsgemäßen Rotorblattsegments aus Fig. 3;
- Fig. 5: eine Detailansicht eines Abschnittes einer erfindungsgemäßen Abdecklippe aus Fig. 4;
- Fig. 6: weitere Detailansichten eines erfindungsgemäßen Rotorblattsegments gemäß Fig. 2;
- Fig. 7: eine Schnittansicht einer erfindungsgemäßen Abdecklippe gemäß der Fig. 1 bis 6; sowie
- Fig. 8: eine erfindungsgemäße Abdecklippe gemäß den Fig. 1 bis 7 in einer perspektivischen Darstellung.

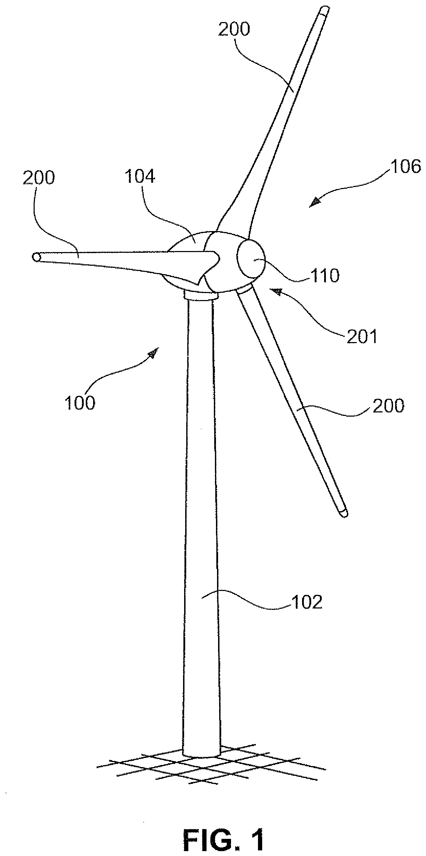

Figur 1 zeigt eine Windenergieanlage 100 mit einem Turm 102 und einer Gondel 104. An der Gondel 104 ist mittels einer Rotorblattwurzel 201 ein Rotor 106 angeordnet. Der Rotor 106 weist drei Rotorblätter 200 auf, welche über jeweils eine Rotorblattwurzel 201 mit einem Spinner 110 verbunden sind. Der Rotor 106 wird im Betrieb durch den Wind in eine Rotationsbewegung versetzt und treibt dadurch einen Generator (nicht dargestellt) in der Gondel 104 an, welcher die Rotationsenergie des Rotors 106 in elektrischen Strom wandelt.

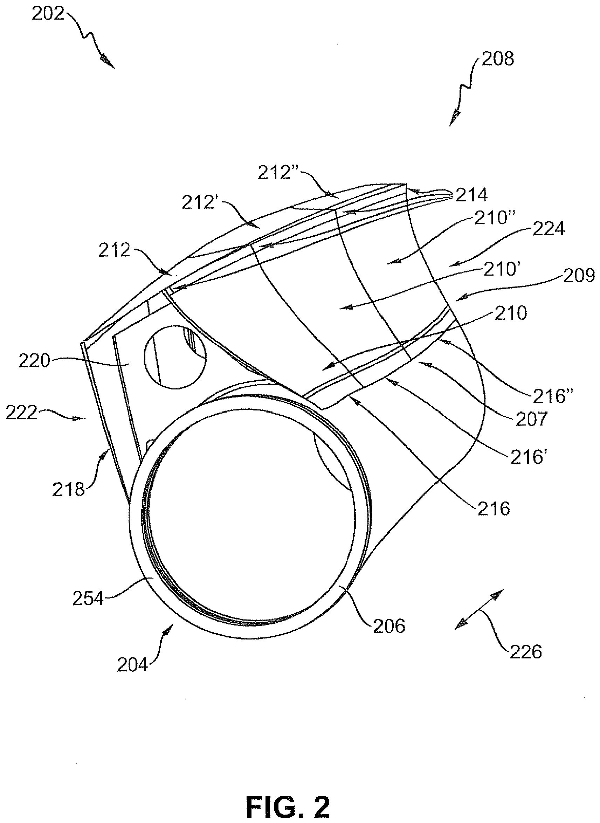

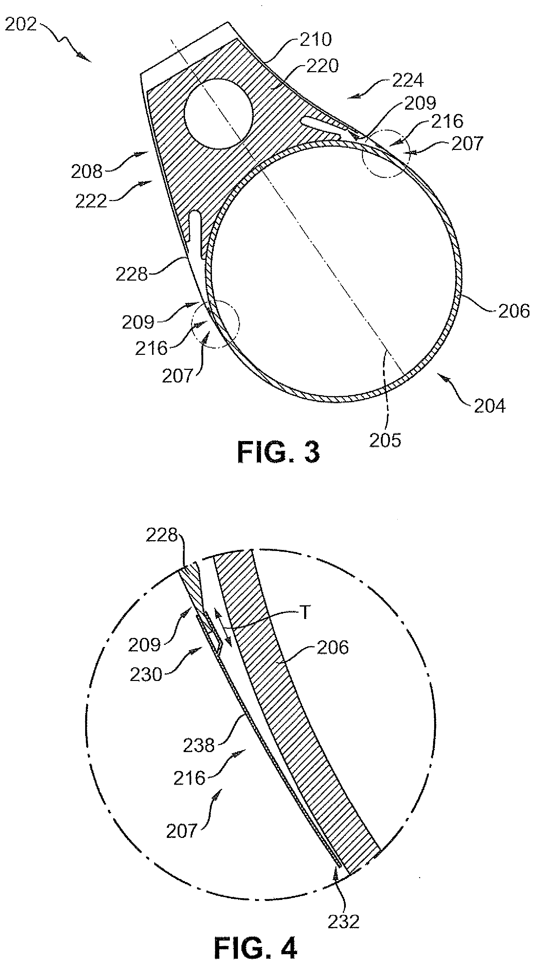

Figur 2 zeigt ein Rotorblattsegment 202 eines der in der Figur 1 gezeigten Rotorblätter 200. Das Rotorblattsegment 202 weist einen Innenblattabschnitt 204 sowie ein Hinterkantensegment 208 zur Vergrößerung einer Tiefe des Rotorblatts 200 in einer Profiltiefenrichtung (205) (vgl. Figur 3) auf. Das Hinterkantensegment 208 ist vorliegend in Längsrichtung des Rotorblattsegments 202 zweigeteilt ausgebildet, wobei hier nur der dem Innenblattabschnitt 204 zugewandte Abschnitt des Hinterkantensegments 208 gezeigt ist.

Der Innenblattabschnitt 204 weist einen Wickelkörper 206 sowie einen Flanschabschnitt 254 zum Anschluss des Blatts an die Nabe des Rotors 106 (Fig. 1) auf. An dem Wickelkörper angeordnet ist das Hinterkantensegment 208. Das Hinterkantensegment weist eine Stützstruktur 220 auf sowie jeweils an der Saugseite 222 sowie der Druckseite 224 angeordnete Schalenelemente, wobei in der Figur 2 lediglich die Schalenelemente der Druckseite 210, 210`, 210" gezeigt sind. Die Schalenelemente 210, 210', 210" sind entlang der Rotorblattlängserstreckung 226 aneinander angrenzend angeordnet. Zur Ermöglichung einer Verbindbarkeit des Hinterkantensegments 208 mit einer oder mehreren Rotorblatthinterkanten (nicht gezeigt) verfügt das Hinterkantensegment 208 über Endkanten 212, 212', 212" sowie betreffende Übergangsbereiche 214.

Am Übergangsbereich zwischen dem Wickelkörper 206 des Innenblattabschnittes 204 zum Hinterkantensegment 208 mit den betreffenden Schalensegmenten 210, 210`, 210" sind Abdecklippen 216, 216' sowie 216" angeordnet, welche den Übergangsbereich 207 und die Kante 209 des Hinterkantensegments 208 überlappen. Diese verschließen den entstehenden Spalt und erlauben gleichzeitig eine Bewegbarkeit des Innenblattabschnittes 204 relativ zu dem Hinterkantensegment 208.

In Figur 3 ist eine Schnittansicht eines Rotorblattsegments 202 gezeigt, wobei die Schnittebene senkrecht zur Rotorblattlängserstreckung 226 (vgl. Figur 2) ausgeführt ist. Das Rotorblattsegment 202 besteht vorliegend aus dem Innenblattabschnitt 204 sowie dem Hinterkantensegment 208. Der Innenblattabschnitt 204 weist den Wickelkörper 206 auf. Sowohl auf der Saugseite 222 als auch auf der Druckseite 224 sind zwischen den Schalensegmenten an der Saugseite 228 und dem Schalensegment an der Druckseite 210 die Abdecklippen 216 angeordnet. Wie aus der Figur 3 zu entnehmen ist, ermöglichen die Abdecklippen 216 einen gleichmäßigen Übergang von der Kontur des Innenblattabschnittes 204 bzw. des Wickelkörpers 206 zu der Kontur des Schalensegments der Saugseite 228 bzw. des Schalensegments der Druckseite 210. Hierdurch werden aerodynamisch nachteilige Phänomene, wie beispielsweise eine Wirbelbildung an dem Übergang 207 zwischen dem Innenblattabschnitt 204 und dem Hinterkantensegment 208 jedenfalls reduziert und bestenfalls vermieden.

Eine vergrößerte Ansicht der Abdecklippe 216 ist in der Figur 4 gezeigt. Die Abdecklippe 216 weist einen Grundkörper 238 mit einem ersten Ende 250, an welchem ein Befestigungsabschnitt 232 angeordnet ist, auf, sowie mit einem zweiten, gegenüberliegend des ersten Endes angeordneten Ende 252, an dem eine Tasche 230 mit einer Tiefe T und einem Taschengrund 247 ausgebildet ist. Die Abdecklippe 216 ist mittels des Befestigungsabschnittes 232 an dem Wickelkörper 206 befestigt, insbesondere verklebt. In der Tasche 230 ist eine Kante 209 des Hinterkantensegments 208 bzw. eine Kante 209 des Schalensegments der Saugseite 228 beweglich aufgenommen. Bewegt sich das Schalensegment der Saugseite 228, beispielsweise infolge durch eine Blattrotation auftretender Kräfte und Momente so erlaubt die Abdecklippe 216 bereichsweise eine Relativbewegung der Kante 209 in Richtung der Tiefe T der Tasche 230, mittels der Tasche 230 eine solche Tolerierung. Jedenfalls bleibt die Oberfläche im Bereich des Übergangs 207 zwischen dem Innenblattabschnitt 204 und dem Hinterkantensegment 208 auch bei einer im Betrieb zu erwartenden Bewegung des Innenblattabschnitts 204 relativ zu dem Hinterkantensegment 208 aerodynamisch vorteilhaft und sicher verschlossen.

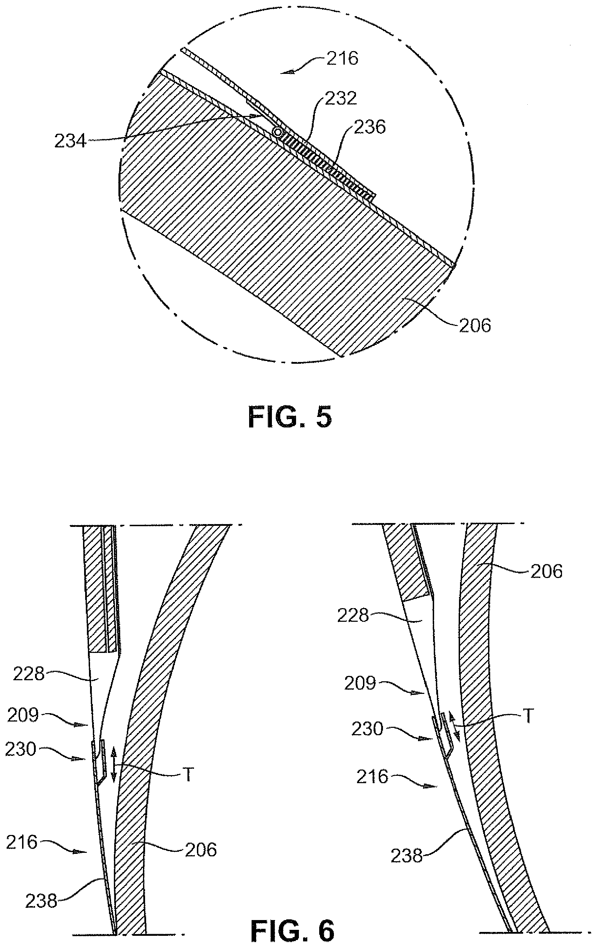

Der Befestigungsabschnitt der Abdecklippe 216 sowie die Befestigung der Abdecklippe 216 an dem Wickelkörper 206 sind in Figur 5 detailliert. Die Verbindung der Abdecklippe 216 mit dem Wickelkörper 206 erfolgt mithilfe einer Klebstoffschicht 236. In den Zwischenraum zwischen Wickelkörper 206 und Abdecklippe 216 ist ein Dichtprofil 234 eingebracht. Dieses dient insbesondere als Montagehilfe und zur Vereinfachung einer gegenüber dem Wickelkörper 206 geneigten bzw. keilförmig angeordneten Montage der Abdecklippe 216. Durch die Form des Dichtprofils 234 wird eine Verrundung der Klebstoffschicht erreicht, die am Rand der Klebstoffschicht eine Reduzierung der Kerbwirkung zur Folge hat. Die Verbindung zwischen dem Wickelkörper 206 und der Abdecklippe 216 wird hierdurch strukturmechanisch verbessert.

In der Figur 6 sind weitere Detailansichten der Abdecklippe 216 und deren Interaktion mit dem Wickelkörper 206 sowie den Kanten des Hinterkantensegments 208 bzw. den betreffenden Schalenelementen 228 gezeigt. Wie der Figur 6 gut zu entnehmen ist, ist das betreffende Schalensegment 228 in Richtung der Tiefe T beweglich in der Tasche 230 aufgenommen und kann vorliegend sowohl auf den Taschengrund 247 zu als auch in die Gegenrichtung bewegt werden, ohne die Tasche 230 zu verlassen bzw. an den Taschengrund 247 anzustoßen.

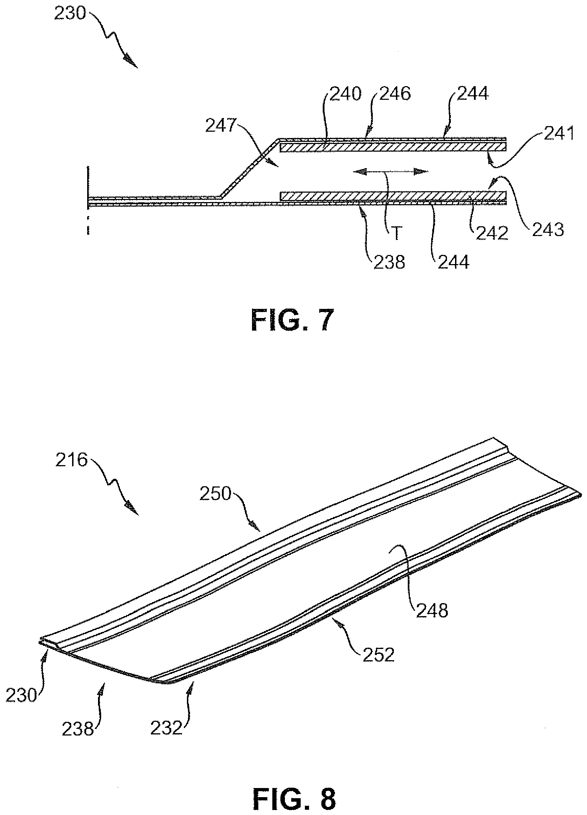

Figur 7 zeigt eine Schnittansicht einer Tasche 230. Die Tasche selbst wird vorliegend aus einem Abschnitt des Grundkörpers 238 und einer mit dem Grundkörper 238 fest verbundenen Taschenschale 246 ausgebildet. Der Grundkörper 238 sowie die Taschenschale 246 sind dabei typischerweise aus einem faserverstärkten Kunststoff ausgebildet. Mit dem Grundkörper 238 bzw. der Taschenschale 246 verbunden sind ein erster Gleitkörper 240 mit einer ersten Gleitfläche 241 sowie ein zweiter Gleitkörper 242 mit einer zweiten Gleitfläche 243.

Eine Kante des Hinterkantensegments 208 bzw. ein betreffendes Schalensegment gleitet auf den Gleitflächen 241, 243 der Gleitkörper 240 und 242. Die Gleitkörper 240 bzw. 242 bestehen dabei jedenfalls partiell aus einem thermoplastischen Kunststoff, derart, dass die Gleitflächen 241, 243 aus ihm ausgebildet sind. In die Gleitkörper 240 bzw. 242 ist jeweils auf der dem Tascheninneren abgewandten Seiten eine Gewebekaschierung 244 eingebracht, typischerweise eingewalzt. Diese Gewebekaschierung 244 ermöglicht es, die entsprechenden Gleitkörper 240 bzw. 242 auf der gewebekaschierten Seite mit einer Matrix eines faserverstärkten Kunststoffes des Grundkörpers 238 und der Taschenschale 246 verbinden zu können. Hierdurch wird eine dauerhaft feste Verbindung des thermoplastischen Bestandteils des ersten Gleitkörpers 240 sowie des zweiten Gleitkörpers 242 mit dem Grundkörper 238 und der Taschenschale 246 ermöglicht, auch wenn der Grundkörper zumindest im Bereich der Kante 209 aus einem faserverstärkten Kunststoff mit einer duroplastischen Matrix ausgebildet ist.

Eine perspektivische Darstellung einer Abdecklippe 216 ist in Figur 8 gezeigt. Die Abdecklippe 216 weist einen Befestigungsabschnitt 232 sowie einen Grundkörper 238 auf. An der dem Befestigungsabschnitt 232 gegenüberliegenden Seite ist die Tasche 230 angeordnet.

### Liste der verwendeten Bezugszeichen

- 100: Windenergieanlage
- 102: Turm
- 104: Gondel
- 106: Rotor
- 110: Spinner
- 200: Rotorblätter
- 201: Rotorblattwurzel
- 202: Rotorblattsegment
- 204: Innenblattabschnitt
- 205: Profiltiefenrichtung
- 206: Wickelkörper
- 207: Übergangsbereich
- 208: Hinterkantensegment
- 209: Kante des Hinterkantensegments
- 210, 210', 210": Schalensegmente Druckseite
- 212, 212', 212": Endkanten
- 214: Übergangsbereiche der Endkantenbereiche
- 216, 216', 216": Abdecklippe
- 218: Dichtelement
- 220: Stützstruktur
- 222: Saugseite
- 224: Druckseite
- 226: Rotorblattlängserstreckung
- 228: Schalensegment Saugseite
- 230: Tasche
- 232: Befestigungsabschnitt
- 234: Dichtprofil
- 236: Klebstoff
- 238: Grundkörper
- 240: Erster Gleitkörper
- 241: Erste Gleitfläche
- 242: Zweiter Gleitkörper
- 243: Zweite Gleitfläche
- 244: Gewebekaschierung
- 246: Taschenschale
- 247: Taschengrund
- 248: Abdecklippen-Grundkörper
- 250: Erstes Ende
- 252: Zweites Ende
- 254: Innenblattabschnittsquerschnitt

## Patentansprüche

1. Rotorblatt (200) für eine Windenergieanlage (100), mit:
- einer Rotorblattwurzel (201) zur Befestigung des Rotorblatts (200) an einer Nabe einer Windenergieanlage (100),
- einem Innenblattabschnitt (204), welcher sich ausgehend von der Rotorblattwurzel (201) in Richtung einer Rotorblattlängserstreckung (226) des Rotorblatts (200) erstreckt,
- einem Hinterkantensegment (208) zur Vergrößerung der Tiefe des Rotorblatts (200) in Profiltiefenrichtung (205) im Bereich des Innenblattabschnitts (204), wobei das Hinterkantensegment (208) an dem Innenblattabschnitt (204) befestigt ist und eine dem Innenblattabschnitt (204) zugewandte Kante (209) aufweist,
wobei in einem Übergangsbereich (207) von dem Innenblattabschnitt (204) zu der Kante (209) des Hinterkantensegments (208) eine Abdecklippe (216, 216', 216") angeordnet ist, die mit der Kante (209) überlappt,
wobei die Abdecklippe (216, 216', 216") eine Tasche (230) mit einer Tiefe (T) aufweist, in welcher die Kante (209) des Hinterkantensegments (208) entlang der Tiefe der Tasche (230) beweglich aufgenommen ist,
**dadurch gekennzeichnet, dass** die Tasche (230) einen oder mehrere Gleitkörper (240, 242) mit einer Gleitfläche (241, 243) zur gleitenden Aufnahme der Kante des Hinterkantensegments (208) aufweist.

2. Rotorblatt (200) nach Anspruch 1,
**dadurch gekennzeichnet, dass** die Abdecklippe (216, 216', 216") einen Übergangsbereich (207) von dem Innenblattabschnitt (204) zu der Kante des Hinterkantensegments (208) überlappt.

3. Rotorblatt (200) nach einem der vorhergehenden Ansprüche,
**dadurch gekennzeichnet, dass** sich die Abdecklippe (216, 216', 216") abschnittsweise oder vollständig in Richtung der Rotorblattlängserstreckung (226) erstreckt.

4. Rotorblatt (200) nach einem der vorhergehenden Ansprüche,
**dadurch gekennzeichnet, dass** die Abdecklippe (216, 216', 216") einen Grundkörper (248) aus einem faserverstärkten Kunststoff.

5. Rotorblatt (200) nach einem der vorhergehenden Ansprüche,
**dadurch gekennzeichnet, dass** die Gleitfläche (241, 243) aus einem thermoplastischen Kunststoff ausgebildet ist.

6. Rotorblatt (200) nach Anspruch 5,
**dadurch gekennzeichnet, dass** auf einer der Gleitfläche (241, 243) abgewandten Seite des Gleitkörpers (240, 242) eine Gewebekaschierung (244) angeordnet ist.

7. Rotorblatt (200) nach den Ansprüchen 4 und 6,
**dadurch gekennzeichnet, dass** der faserverstärkte Kunststoff der Abdecklippe eine Matrix aufweist, in die die Fasern eingebettet sind, und wobei die Gewebekaschierung mit der Matrix des faserverstärkten Kunststoffs verbunden ist, insbesondere in ihr eingebettet ist.

8. Rotorblatt (200) nach Anspruch 5,
**dadurch gekennzeichnet, dass** der thermoplastische Kunststoff ausgewählt ist aus der Liste: Polyoxymethylen (POM), Polyethylenterephthalat (PET-P), Polyamid 6 (PA 6), Polyketon (PK), Polyvinylidenfluorid (PVDF) und Polypropylen (PP).

9. Rotorblatt (200) nach Anspruch 4, oder einem der Ansprüche 5-8, wenn von Anspruch 4 abhängig,
**dadurch gekennzeichnet, dass** der Grundkörper (248) ein erstes Ende (250) und ein zweites Ende (252) aufweist, wobei an dem ersten Ende (250) die Tasche (230) angeordnet ist und an dem zweiten, der Tasche (230) gegenüberliegenden Ende (252) ein Befestigungsabschnitt (232) zur Befestigung an dem Innenblattabschnitt (204).

10. Rotorblatt (200) nach Anspruch 9,
**dadurch gekennzeichnet, dass** an dem Befestigungsabschnitt (232) eine Dichtung, insbesondere eine Gummidichtung, mit einem Dichtprofil (234) angeordnet ist.

11. Rotorblatt (200) nach einem der vorhergehenden Ansprüche, **dadurch gekennzeichnet, dass** der Innenblattabschnitt (204) einen kreisförmigen oder ovalen, insbesondere ellipsenförmigen Querschnitt (254) aufweist.

12. Rotorblatt (200) nach einem der vorhergehenden Ansprüche, **dadurch gekennzeichnet, dass** der Innenblattabschnitt (204) als Wickelkörper (206) ausgeführt ist.

13. Windenergieanlage (100), mit
- einem Turm (102),
- einer drehbar an dem Turm (102) gelagerten Gondel (104),
- einem drehbar an der Gondel (104) gelagerten Rotor (106), und
- einer Mehrzahl an dem Rotor (106) befestigter Rotorblätter (200), von denen mindestens eines gemäß einem der Ansprüche 1 bis 12 ausgebildet ist

## Claims

1. A rotor blade (200) for a wind turbine (100), comprising:
- a rotor blade root (201) for fixing the rotor blade (200) to the hub of a wind turbine (100),
- an inner blade portion (204) which extends from the rotor blade root (201) in the direction of a longitudinal extension (226) of the rotor blade (200),
- a rear edge segment (208) for increasing the depth of the rotor blade (200) in the profile depth direction (205) in the region of the inner blade portion (204), wherein the rear edge segment (208) is fixed to the inner blade portion (204) and has an edge (209) facing the inner blade portion (204),
wherein a cover lip (216, 216", 216") which overlaps with the edge (209) is arranged in a transition region (207) from the inner blade portion (204) to the edge (209) of the rear edge segment (208),
wherein the cover lip (216, 216', 216") has a pocket (230) with a depth (T), in which the edge (209) of the rear edge segment (208) is received movably along the depth of the pocket (230),
**characterized in that** the pocket (230) has one or more anti-friction members (240, 242) with an anti-friction surface (241, 243) for slidingly receiving the edge of the rear edge segment (208).

2. The rotor blade (200) according to claim 1,
**characterized in that** the cover lip (216, 216', 216") overlaps a transition region (207) from the inner blade portion (204) to the edge of the rear edge segment (208).

3. The rotor blade (200) according to any one of the preceding claims,
**characterized in that** the cover lip (216, 216', 216") extends in sections or completely in the direction of the rotor blade's longitudinal extension (226).

4. The rotor blade (200) according to any one of the preceding claims,
**characterized in that** the cover lip (216, 216', 216") has a base member (248) made of a fiber-reinforced plastic.

5. The rotor blade (200) according to any one of the preceding claims,
**characterized in that** the anti-friction surface (241, 243) is made of a thermoplastic plastic.

6. The rotor blade (200) according to claim 5,
**characterized in that** a fabric laminate (244) is arranged on a side of the anti-friction member (240, 242) facing away from the anti-friction surface (241, 243).

7. The rotor blade (200) according to claim 4 or 6,
**characterized in that** the fiber-reinforced plastic of the cover lip has a matrix into which the fibers are embedded, and wherein the fabric laminate is joined to the matrix of the fiber-reinforced plastic and more particularly is embedded therein.

8. The rotor blade (200) according to claim 5,
**characterized in that** the thermoplastic plastic is selected from the list: polyoxymethylene (POM), polyethylene terephthalate (PET-P), polyamide 6 (PA 6), polyketone (PK), polyvinylidene fluoride (PVDF) and polypropylene (PP).

9. The rotor blade (200) according to claim 4, or any one of claims 5 to 8 when depending on claim 4,
**characterized in that** the base member (248) has a first end (250) and a second end (252), wherein the pocket (230) is arranged at the first end (250) and an attachment portion (232) for attachment to the inner blade portion (204) is arranged at the second end (252) opposite the pocket (230).

10. The rotor blade (200) according to claim 9,
**characterized in that** a seal, in particular a rubber seal, having a sealing profile (234) is arranged on the attachment portion (232).

11. The rotor blade (200) according to any one of the preceding claims,
**characterized in that** the inner blade portion (204) has a circular or oval, in particular an elliptical cross-section (254).

12. The rotor blade (200) according to any one of the preceding claims,
**characterized in that** the inner blade portion (204) is provided in the form of a wound body (206).

13. A wind turbine (100), comprising
- a tower (102),
- a nacelle (104) mounted rotatably on the tower (102),
- a rotor (106) mounted rotatably on the nacelle (104), and
- a plurality of rotor blades (200) attached to the rotor (106), of which at least one is designed according to any one of claims 1 to 12.

## Revendications

1. Pale de rotor (200) pour une éolienne (100), avec :
- une racine de pale de rotor (201) permettant de fixer la pale de rotor (200) sur un moyeu d'une éolienne (100),
- une section de pale intérieure (204), laquelle s'étend en partant de la racine de pale de rotor (201) en direction d'une extension longitudinale de pale de rotor (226) de la pale de rotor (200),
- un segment de bord de fuite (208) permettant d'agrandir la profondeur de la pale de rotor (200) dans le sens de la profondeur de profil (205) dans la zone de la section de pale intérieure (204), dans laquelle le segment de bord de fuite (208) est fixé sur la section de pale intérieure (204) et présente un bord (209) tourné vers la section de pale intérieure (204),
dans laquelle
est disposée, dans une zone de transition (207) depuis la section de pale intérieure (204) vers le bord (209) du segment de bord de fuite (208), une lèvre de recouvrement (216, 216', 216''), qui chevauche le bord (209),
dans laquelle la lèvre de recouvrement (216, 216', 216") présente une poche (230) avec une profondeur (T), dans laquelle le bord (209) du segment de bord de fuite (208) est logé de manière mobile le long de la profondeur de la poche (230),
**caractérisée en ce que** la poche (230) présente un ou plusieurs corps glissants (240, 242) avec une surface glissante (241, 243) pour loger de manière glissante le bord du segment de bord de fuite (208).

2. Pale de rotor (200) selon la revendication 1,
**caractérisée en ce que** la lèvre de recouvrement (216, 216', 216") chevauche une zone de transition (207) depuis la section de pale intérieure (204) vers le bord du segment de bord de fuite (208).

3. Pale de rotor (200) selon l'une quelconque des revendications précédentes,
**caractérisée en ce que** la lèvre de recouvrement (216, 216', 216") s'étend par endroits ou totalement en direction de l'extension longitudinale de pale de rotor (226) .

4. Pale de rotor (200) selon l'une quelconque des revendications précédentes,
**caractérisée en ce que** la lèvre de recouvrement (216, 216', 216") présente un corps de base (248) composé d'une matière plastique renforcée par des fibres.

5. Pale de rotor (200) selon l'une quelconque des revendications précédentes,
**caractérisée en ce que** la surface glissante (241, 243) est réalisée à partir d'une matière synthétique thermoplastique.

6. Pale de rotor (200) selon la revendication 5,
**caractérisée en ce qu'**un cache en tissu (244) est disposé sur un côté, opposé à la surface glissante (241, 243), du corps glissant (240, 242).

7. Pale de rotor (200) selon les revendications 4 et 6,
**caractérisée en ce que** la matière synthétique renforcée par des fibres de la lèvre de recouvrement présente une matrice, dans laquelle les fibres sont intégrées, et dans laquelle le cache en tissu est relié à la matrice de la matière synthétique renforcée par des fibres, en particulier est intégré dans celle-ci.

8. Pale de rotor (200) selon la revendication 5,
**caractérisée en ce que** la matière synthétique renforcée par des fibres est choisie parmi la liste : polyoxyméthylène (POM), polytéréphtalate d'éthylène (PET-P), polyamide 6 (PA 6), polycétone (PK), polyfluorure de vinylidène (PVDF) et polypropylène (PP).

9. Pale de rotor (200) selon la revendication 4 ou selon l'une des revendications 5 - 8, si elles dépendent de la revendication 4, **caractérisée en ce que** le corps de base (248) présente une première extrémité (250) et une deuxième extrémité (252), dans laquelle la poche (230) est disposée sur la première extrémité (250) et une section de fixation (232) destinée à être fixée sur la section de pale intérieure (204) est disposée sur la deuxième extrémité (252) opposée à la poche (230).

10. Pale de rotor (200) selon la revendication 9,
**caractérisée en ce qu'**un joint d'étanchéité, en particulier un joint d'étanchéité en caoutchouc, avec un profil d'étanchéité (234) est disposé sur la section de fixation (232).

11. Pale de rotor (200) selon l'une quelconque des revendications précédentes,
**caractérisée en ce que** la section de pale intérieure (204) présente une section transversale (254) circulaire ou ovale, en particulier elliptique.

12. Pale de rotor (200) selon l'une quelconque des revendications précédentes,
**caractérisée en ce que** la section de pale intérieure (204) est réalisée en tant que corps d'enroulement (206).

13. Eolienne (100) avec
- un mât (102),
- une nacelle (104) montée de manière à pouvoir tourner sur le mât (102),
- un rotor (106) monté de manière à pouvoir tourner sur la nacelle (104), et
- une multitude de pales de rotor (200) fixées sur le rotor (106), dont au moins une est réalisée selon l'une quelconque des revendications 1 à 12.
